# EUROPÄISCHE PATENTSCHRIFT

(11) **EP 0 986 939 B1**
(45) Veröffentlichungstag und Bekanntmachung des Hinweises auf die Patenterteilung: **23.06.2004**
(21) Anmeldenummer: 99919177.8
(22) Anmeldetag: 01.04.1999
(51) Int. Cl.: H05H 1/34, H05H 1/44, B05D 3/14, B29C 59/14

(54) **VORRICHTUNG ZUR PLASMABEHANDLUNG VON OBERFLÄCHEN**
PLASMA PROCESSING DEVICE FOR SURFACES
DISPOSITIF DE TRAITEMENT DE SURFACES AU PLASMA

(30) Priorität: 03.04.1998 DE 29805999 U
(43) Veröffentlichungstag der Anmeldung: 22.03.2000
(73) Patentinhaber: PlasmaTreat GmbH, 33803 Steinhagen (DE)
(72) Erfinder: FÖRNSEL, Peter, D-32139 Spenge (DE); BUSKE, Christian, D-33803 Steinhagen (DE)
(74) Vertreter: COHAUSZ & FLORACK
(86) Internationale Anmeldenummer: PCT/EP1999/002256
(87) Internationale Veröffentlichungsnummer: WO 1999/052333

(56) Entgegenhaltungen:
- WO-A-93/13905
- DE-A- 19 532 412
- DE-U- 29 805 999

## Beschreibung

Die Erfindung betrifft eine Vorrichtung zur Plasmabehandlung von Oberflächen. Insbesondere befaßt sich die Erfindung mit der Vorbehandlung von Kunststoffoberflächen, durch die ein Auftragen von Klebstoffen, Druckfarben und dergleichen auf die Kunststoffoberfläche ermöglicht wird. Eine solche Vorbehandlung ist erforderlich, da Kunststoffoberflächen im Normalzustand nicht mit Flüssigkeiten benetzbar sind und deshalb die Druckfarbe oder den Klebstoff nicht annehmen. Durch die Vorbehandlung wird die Oberflächenstruktur des Kunststoffs so verändert, daß die Oberfläche für Flüssigkeiten mit relativ großer Oberflächenspannung benetzbar wird. Die Oberflächenspannung der Flüssigkeiten, mit denen die Oberfläche gerade noch benetzbar ist, stellt ein Maß für die Qualität der Vorbehandlung dar.

Ein bewährtes Verfahren für die Vorbehandlung von Kunststoffoberflächen beruht auf dem Prinzip der Coronaentladung. Bei diesem Verfahren wird der zu behandelnde Kunststoff zwischen zwei üblicherweise mit Keramikmaterial beschichteten Elektroden hindurchgeführt, an denen eine hochfrequente Hochspannung anliegt, so daß eine Coronaentladung durch das Kunststoffmaterial hindurch erfolgt. Dieses Verfahren eignet sich jedoch nur für relativ dünne Werkstücke mit ebener Oberfläche, beispielsweise für Kunststoffolien.

In DE 195 32 412 A wird eine Vorrichtung zum Vorbehandeln von Oberflächen mit Hilfe eines Plasmastrahls beschrieben. Durch eine besondere Gestaltung der Plasmadüse wird ein verhältnismäßig kühler, jedoch hochreaktiver Plasmastrahl erreicht, der etwa die Gestalt und die Abmessungen einer Kerzenflamme hat und somit auch die Vorbehandlung von Profilteilen mit verhältnismäßig tiefem Relief gestattet. Aufgrund der hohen Reaktivität des Plasmastrahls genügt eine sehr kurzzeitige Vorbehandlung, so daß das Werkstück mit entsprechend hoher Geschwindigkeit an dem Plasmastrahl vorbeigeführt werden kann. Aufgrund der vergleichsweise niedrigen Temperatur des Plasmastrahls ist daher auch die Vorbehandlung von wärmeempfindlichen Kunststoffen möglich. Da keine Gegenelektrode auf der Rückseite des Werkstücks erforderlich ist, können auch die Oberflächen von beliebig dicken, blockartigen Werkstücken. Hohlkörpern und dergleichen problemlos vorbehandelt werden. Für eine gleichmäßige Behandlung größerer Oberflächen ist in der genannten Veröffentlichung eine Batterie aus mehreren versetzt angeordneten Plasmadüsen vorgeschlagen worden. In diesem Fall ist jedoch ein relativ hoher apparativer Aufwand erforderlich.

Aufgabe der Erfindung ist es, eine Vorrichtung zur Plasmabehandlung von Oberflächen anzugeben, die mit geringem apparativem Aufwand eine schnelle und effiziente Vorbehandlung größerer Oberflächen gestattet.

Diese Aufgabe wird mit den in Anspruch 1 angegebenen Merkmalen gelöst.

Die erfindungsgemäße Vorrichtung weist einen Rotationskopf auf, der mindestens eine exzentrisch angeordnete Plasmadüse zur Erzeugung eines parallel zur Rotationsachse gerichteten Plasmastrahls trägt.

Wenn das Werkstück relativ zu dem mit hoher Drehzahl rotierenden Rotationskopf bewegt wird, überstreicht der Plasmastrahl eine streifenförmige Oberflächenzone des Werkstücks, deren Breite dem Durchmesser des bei der Rotation von der Plasmadüse beschriebenen Kreises entspricht. Auf diese, Weise kann eine relativ große Oberfläche rationell vorbehandelt werden.

Dabei ist es unschädlich, wenn die Intensität der Vorbehandlung in dem überstrichenen Streifen nicht völlig einheitlich ist. Die Behandlungsparameter, insbesondere die Drehzahl des Rotationskopfes und die Translationsgeschwindigkeit des Werkstücks relativ zum Rotationskopf lassen sich innerhalb weiter Grenzen stets so wählen, daß in dem behandelten Streifen überall eine ausreichende Benetzbarkeit des Werkstücks erreicht wird und es andererseits in den am intensivsten behandelten Zonen nicht zu einer thermischen Schädigung des Materials kommt.

Aufgrund der großen Reichweite des Plasmastrahls kann die behandelte Oberfläche des Werkstücks auch gewölbt oder profiliert sein. Die Vorrichtung eignet sich deshalb beispielsweise auch zum Vorbehandeln von Fenster- oder Türrahmenprofilen aus Kunststoff, von Kunststoffflaschen, -eimern und dergleichen.

Als besonders vorteilhaft erweist es sich bei der erfindungsgemäßen Vorrichtung, daß durch die Rotation des Kopfes und den mitrotierenden Plasmastrahl ein großräumiger Wirbel erzeugt wird, mit der Folge, daß sich in der Mitte des Wirbels ein Unterdruck ausbildet. Dieser Unterdruck wirkt einem radialen Ausweichen des Plasmastrahls entgegen und führt dazu. daß sich der Plasmastrahl förmlich an die Oberfläche des Werkstücks ansaugt. so daß der Plasmastrahl in innige Berührung mit der Werkstückoberfläche kommt.

Vorteilhafte Ausgestaltungen der Erfindung ergeben sich aus den Unteransprüchen.

Bevorzugt sind zwei oder mehr Plasmadüsen in gleichmäßigen Winkelabständen an dem Rotationskopf angeordnet, so daß mit mindestens zwei Plasmastrahlen gleichzeitig gearbeitet wird und die Behandlungszeit entsprechend verkürzt wird. Diese Anordnung hat zugleich den Vorteil, daß der Rotationskopf schon aufgrund der symmetrischen Anordnung der Plasmadüsen weitgehend ausgewuchtet ist.

Aufgrund der hohen Drehzahl des Rotationskopfes, die beispielsweise 1000 min⁻¹ oder mehr betragen kann, kommt es beispielsweise aufgrund von Corioliskräften zu einer Verdrallung der von den einzelnen Plasmadüsen abgegebenen Plasmastrahlen. Bevorzugt weist jede Plasmadüse zusätzlich eine eigene Dralleinrichtung auf, die für eine Stabilisierung und Bündelung des Plasmastrahls sorgt. Die Drehrichtung des Rotationskopfes ist in diesem Fall an den Drehsinn der Dralleinrichtungen in den einzelnen Plasmadüsen anzupassen.

Im folgenden wird ein Ausführungsbeispiel anhand der Zeichnung näher erläutert.

Es zeigen:
- Fig. 1: einen axialen Schnitt durch einen Rotationskopf;
- Fig. 2: eine Frontansicht des Rotationskopfes; und
- Fig. 3: einen axialen Schnitt durch die gesamte Vorrichtung in der Ebene III-III in Figur 1.

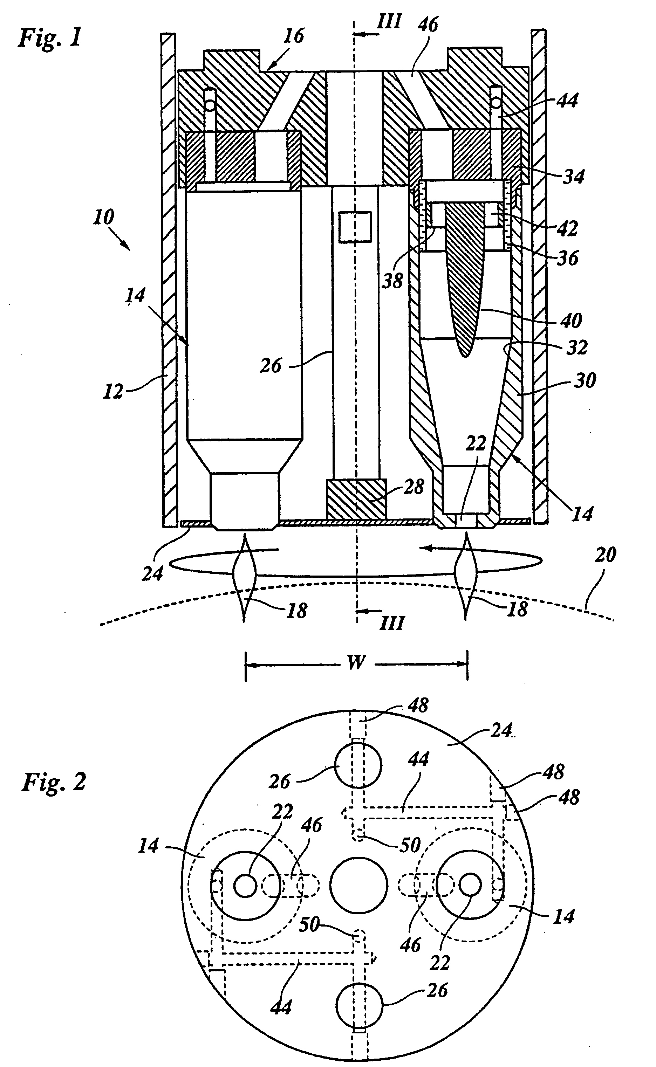

In Figur 1 ist ein Rotationskopf 10 dargestellt, der um seine in der Zeichnung senkrecht verlaufende Mittelachse rotiert und von einem als Berührungsschutz dienenden stationären Zylinder 12 umgeben ist. Der Rotationskopf 10 weist zwei einander diametral gegenüberliegende Plasmadüsen 14 auf, die an einem ringförmigen Verteilerblock 16 gehalten sind und parallel zur Rotationsachse gerichtete Plasmastrahlen 18 abgeben. Wenn der Rotationskopf 10 in der Richtung senkrecht zur Zeichenebene in Figur 1 relativ zu der Oberfläche eines Werkstücks 20 bewegt wird und dabei mit hoher Drehzahl rotiert, so überstreichen die Plasmastrahlen 18 auf der Werkstückoberfläche relativ gleichmäßig einen Streifen mit der Breite W von beispielsweise 8 cm.

Die Mündungen 22 der Plasmadüsen 14 liegen in einer gemeinsamen Ebene in einer Stirnplatte 24. die durch zwei Streben 26 mitdrehbar an dem Verteilerblock 16 gehalten ist. Die beiden Streben 26 liegen in einer zur Ebene der Plasmadüsen 14 rechtwinkligen Ebene und sind an der Stirnplatte 24 durch einen Riegel 28 miteinander verbunden.

Jede Plasmadüse 14 weist ein im wesentlichen zylindrisches, zur Mündung hin verjüngtes Gehäuse 30 aus Metall auf, das einen sich zur Mündung 22 konisch verjüngenden Wirbelkanal 32 bildet. Die Mündung 22 der Plasmadüse ist gegenüber dem Innenquerschnitt des Wirbelkanals 32 nochmals deutlich verengt. Das stromaufwärtige Ende des Gehäuses 30 ist fest mit einem Übergangsstück 34 aus Metall verbunden, das in den Verteilerblock 16 eingelassen ist. In dem Übergangsstück 34 und dem daran angrenzenden Ende des Gehäuses 30 ist koaxial ein Keramikrohr 36 befestigt, das einen gegenüber dem Übergangsstück 34 und dem Gehäuse 30 elektrisch isolierten Drallring 38 aufnimmt. Der Drallring 38 bildet eine Stiftelektrode 40, die in den Wirbelkanal 32 hineinragt und von einem Kranz von Drallöffnungen 42 umgeben ist. In den Übergangsstücken 34 und dem Verteilerblock 16 sind Gaskanäle 44 ausgebildet, über die die Plasmadüsen mit Arbeitsgas versorgt werden. Weiterhin enthalten die Übergangsstücke 34 und der Verteilerblock 16 Kabelkanäle 46 für nicht gezeigte Hochspannungskabel, mit denen eine Spannung an die Drallringe 36 und die jeweils damit verbundenen Stiftelektroden 40 angelegt wird.

Während des Betriebs der Vorrichtung wird über die Gaskanäle 44 Druckluft als Arbeitsgas zugeführt. Die Druckluft strömt durch die Drallöffnungen 42 des Drallrings 38 und wird dadurch verdrallt, so daß sie wirbelförmig durch den Wirbelkanal 32 zur Mündung 22 der Plasmadüse strömt. An die Stiftelektrode 40 wird eine Wechselspannung von einigen kV mit einer Frequenz von beispielsweise 20 kHz angelegt, während das Gehäuse 30 der Plasmadüse über den Verteilerring 16 geerdet ist. Beim Einschalten der Spannung kommt es aufgrund der hohen Frequenz zunächst zu einer Coronaentladung zwischen dem Drallring 38 und dem als Dielektrikum wirkenden Keramikrohr 36. Durch diese Coronaentladung wird dann eine Funkenentladung zwischen der Stiftelektrode 40 und dem Gehäuse 30 gezündet. Der Entladungsfunke erstreckt sich jedoch nicht etwa radial von der Stiftelektrode 40 zur umgebenden Wand des Gehäuses 30, sondern er wird durch die drallförmige Gasströmung mitgerissen und im Kern des Gaswirbels kanalisiert, so daß er sich geradlinig von der Stiftelektrode 40 auf der Mittelachse des Wirbelkanals 32 zur Mündung 22 erstreckt und sich erst dort radial auf den Rand der Mündung verzweigt. Dies führt zu der erwünschten Bildung eines hochreaktiven und gut gebündelten, dabei jedoch verhältnismäßig kühlen Plasmastrahls 18, der sich zudem aufgrund seiner Verdrallung gut an die Oberfläche das Werkstücks 20 anschmiegt.

In Figur 2 ist die Anordnung der Gaskanäle 44 in dem Verteilerblock 16 dargestellt. Die Gaskanäle werden durch ein System einander kreuzender Bohrungen gebildet, die jeweils an den äußeren Enden durch Stopfen 48 verschlossen sind und jeweils einen axialen Einlaßkanal 50 mit der zugehörigen Plasmadüse 14 verbinden.

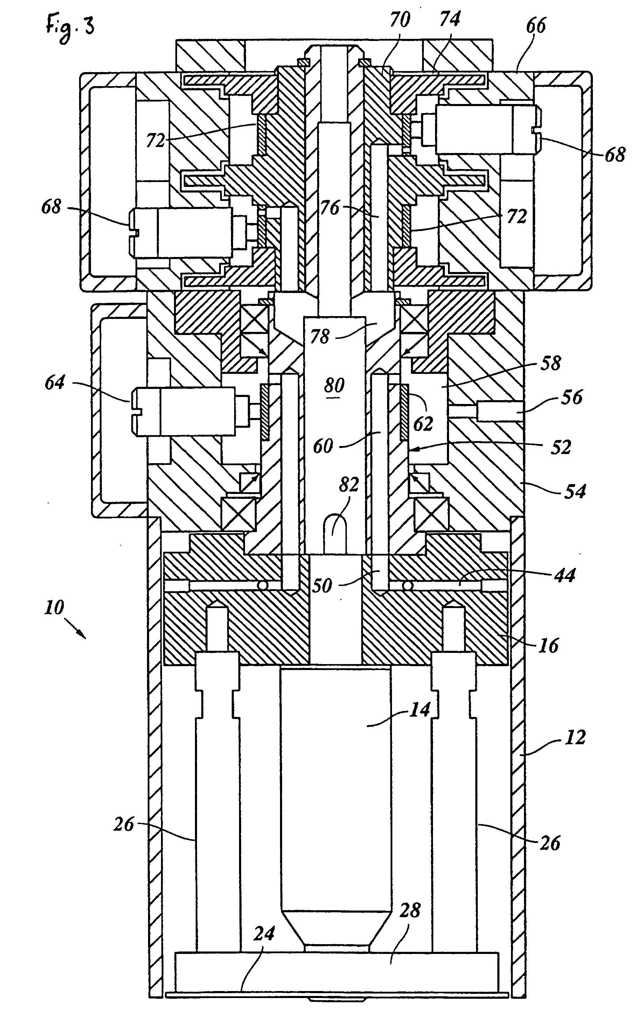

Wie aus Figur 3 hervorgeht, ist der Verteilerblock 16 am verdickten Ende einer Welle 52 befestigt, die drehbar in einem Lagergehäuse 54 gelagert ist. Das Lagergehäuse 54 weist einen Druckluftanschluß 56 auf, der zu einer von der Welle 52 durchlaufenen Druckkammer 58 führt. Die Druckkammer 58 ist durch eine druckdichte Ausbildung der Lager für die Welle 52 dicht verschlossen. Die Welle 52 weist zwei exzentrisch angeordnete axiale Gaskanäle 60 auf, die an einem Ende mit der Druckkammer 58 in Berührung stehen und am entgegengesetzten Ende in einen der erwähnten axialen Kanäle 50 des Verteilerblockes 16 übergehen. Auf diese Weise werden die Plasmadüsen 14 des Rotationskopfes 10 über den Druckluftanschluß 56 mit Druckluft versorgt.

Die Welle 52 trägt innerhalb der Druckkammer 58 einen Schleifring 62, der mit einem Schleifkontakt 64 in Berührung steht. Über diesen Schleifkontakt wird eine zuverlässige Erdung der Welle 52 und des Verteilerblockes 16 sowie der damit verbundenen Gehäuse 30 der Plasmadüsen 14 sichergestellt.

An das Lagergehäuse 54 schließt sich auf der dem Rotationskopf 10 entgegengesetzten Seite ein Anschlußgehäuse 66 an, das zwei isolierte Schleifkontakte 68 für die Hochspannungsversorgung der Plasmadüsen 14 aufnimmt. Ein in das Kontaktgehäuse 66 hineinragender Fortsatz der Welle 52 trägt einen Isolator 70. auf dem zwei Schleifringe 72 angeordnet sind, die jeweils mit einem der Schleifkontakte 68 in Berührung stehen. Durch den mit radial auskragenden Scheiben 74 versehenen Isolator 70 werden die Schleifringe 72 voneinander sowie von der Welle 52 und dem Kontaktgehäuse 66 isoliert. Außerdem weist der Isolator 70 zwei axiale Kabelkanäle 76 auf, die jeweils von einem der Schleifringe 72 zum stirnseitigen Ende des Isolators 70 führen, das an einer Schulter der Welle 52 anliegt. In dieser Schulter ausgebildete Durchbrüche 78 verbinden die Kabelkanäle 76 mit einer Mittelbohrung 80 der Welle 52. Das entgegengesetzte Ende dieser Mittelbohrung 80 ist über radiale Durchbrüche 82 mit den in Figur 1 gezeigten Kabelkanälen 46 des Verteilerblockes 16 verbunden. Auf diese Weise ist es möglich, die Schleifringe 72 über die erwähnten Hochspannungskabel elektrisch mit den Drallringen 38 und Stiftelektroden 40 der Plasmadüsen 14 zu verbinden. Die getrennten elektrischen Zuleitungen für die beiden Plasmadüsen gestatten es. jede Plasmadüse über eine eigene Hochspannungsquelle mit der Betriebsspannung zu versorgen. Dies ist wesentlich, damit die nötige Zündspannung zum Zünden einer Plasmadüse auch dann erzeugt werden kann, wenn in der anderen Plasmadüse bereits die Funkenentladung stattfindet.

## Patentansprüche

1. Vorrichtung zur Plasmabehandlung von Oberflächen, **gekennzeichnet durch** einen Rotationskopf (10), der mindestens eine exzentrisch angeordnete Plasmadüse (14) zur Erzeugung eines parallel zur Rotationsachse gerichteten Plasmastrahls (18) trägt.

2. Vorrichtung nach Anspruch 1, **dadurch gekennzeichnet, daß** mehrere Plasmadüsen (14) in gleichmäßigen Winkelabständen um die Rotationsachse herum angeordnet sind.

3. Vorrichtung nach Anspruch 1 oder 2, **dadurch gekennzeichnet, daß** jede Plasmadüse (14) eine Dralleinrichtung (38) zur Erzeugung eines verdrallten Plasmastrahls aufweist.

4. Vorrichtung nach Anspruch 3, **dadurch gekennzeichnet, daß** jede Plasmadüse (14) ein längliches, als geerdete Elektrode dienendes Gehäuse (30) aufweist, das einen länglichen Wirbelkanal (32) bildet, der an einem Ende die Dralleinrichtung (38) und eine Hochspannungselektrode (40) aufnimmt und am entgegengesetzten Ende zu einer Mündung (22) verengt ist, und daß die Dralleinrichtung (38) und der Wirbelkanal (32) so ausgebildet sind, daß ein von der Hochspannungselektrode (40) ausgehender Entladungsfunke im längs der Mittelachse des Wirbelkanals (32) verlaufenden Wirkbelkem kanalisiert wird und sich erst in der Mündung (22) auf das Gehäuse (30) verzweigt.

5. Vorrichtung nach einem der vorstehenden Ansprüche, **dadurch gekennzeichnet, daß** die Plasmadüse (14) mit einer hochfrequenten Wechselspannung betreibbar ist.

6. Vorrichtung nach Anspruch 5, **dadurch gekennzeichnet, daß** die Plasmadüse (14) ein dielektrisches Element (36) aufweist, daß die Elektroden (30; 40) der Plasmadüse voneinander trennt und die Erzeugung einer Coronaentladung als Zündentladung gestattet.

7. Vorrichtung nach einem der vorstehenden Ansprüche, **dadurch gekennzeichnet, daß** die Plasmadüse (14) in einem Verteilerblock (16) gehalten ist, der Gaskanäle (44) und Kabelkanäle (46) für die Versorgung der Plasmadüse mit Arbeitsgas und Betriebsspannung aufweist und am Ende einer Welle (52) befestigt ist, die durch eine Druckkammer (58), in die das Arbeitsgas zugeführt wird, sowie durch ein Kontaktgehäuse (66) verläuft und innerhalb des Kontaktgehäuses mit Schleifringen (72) versehen ist und in der axiale Gasund Kabelkanäle (60; 76, 80) zur Verbindung mit den entsprechenden Kanälen des Verteilerblockes (16) ausgebildet sind.

8. Vorrichtung nach Anspruch 7, **dadurch gekennzeichnet, daß** die Welle (52) in einem die Druckkammer (58) bildenden Lagergehäuse (54) gelagert ist und frei in das Kontaktgehäuse (66) ragt, das auf der dem Rotationskopf (10) entgegengesetzten Seite des Lagergehäuses (54) angeordnet ist.

## Claims

1. Apparatus for plasma surface treatment, comprising a rotatable head (10) having at least one eccentrically disposed plasma nozzle (14) for generating a plasma jet (18) directed in parallel with the axis of rotation.

2. Apparatus according to claim 1, wherein a plurality of the plasma nozzles (14) are arranged at even angular spacings around the axis of rotation.

3. Apparatus according to claim 1 or 2, wherein each plasma nozzle (14) has a swirl system (38) for swirling the plasma jet.

4. Apparatus according to claim 3, wherein each plasma nozzle (14) has an elongated casing (30) defining a grounded electrode and forming an elongated vortex channel (32) accommodating the swirl system (38) and including a mouth (22) through which an electric arc exits the nozzle, the channel being tapered toward the mouth, and wherein each plasma nozzle further has a high voltage electrode (40) disposed in the channel, the swirl system (38) and the vortex channel (32) arranged such that an electric arc discharge from the high voltage electrode (40) is channeled in a vortex core extending along a central axis of the vortex channel and branched to the casing (30) only when reaching the mouth (22).

5. Apparatus according to any of the preceding claims, wherein the plasma nozzle (14) is powered by a high frequency voltage.

6. Apparatus according to claim 5, wherein the plasma nozzle (14) has a dielectric member (36) separating the electrodes (30;40) from one another and permitting a corona discharge serving as an ignition discharge.

7. Apparatus according to any of the preceding claims, wherein the plasma nozzle (14) is mounted to a distributor block (16) having gas passages (44) and cable passages (46) for respectively supplying a working gas and an operating voltage to the plasma nozzle, the block mounted to one end of a shaft (52) which passes through a pressure chamber (58) into which the working gas is supplied, and which also passes through a connector housing (66) and is provided with collector rings (72) inside of the connector housing, the shaft having axial gas and cable passages (60;76;80) for connection with corresponding passages in the distributor block (16).

8. Apparatus according to claim 7, wherein the shaft (52) is journaled in a bearing housing (54) forming the pressure chamber (58) and freely projects into the contact housing (66) disposed on a side of the bearing housing (54) disposed opposite to the rotating head (10) .

## Revendications

1. Dispositif pour le traitement au plasma de surfaces, **caractérisé par** une tête de rotation (10), qui porte au moins une buse de plasma (14) disposée de façon excentrée pour générer un jet de plasma (18) orienté parallèlement à l'axe de rotation.

2. Dispositif selon la revendication 1, **caractérisé en ce que** plusieurs buses de plasma (14) sont disposées à des distances angulaires régulières autour de l'axe de rotation.

3. Dispositif selon la revendication 1 ou 2, **caractérisé en ce que** chaque buse de plasma (14) présente un appareil de rotation (38) pour générer un jet de plasma torsadé.

4. Dispositif selon la revendication 3, **caractérisé en ce que** chaque buse de plasma (14) présente un boîtier (30) allongé et servant d'électrode reliée à la terre, qui forme un canal de turbulence (32) allongé, lequel reçoit sur une extrémité l'appareil de rotation (38) et une électrode à haute tension (40) et est rétréci sur l'extrémité opposée en un orifice (22), et **en ce que** l'appareil de rotation (38) et le canal de turbulence (32) sont conçus de telle sorte qu'une étincelle de décharge partant de l'électrode à haute tension (40) est canalisée dans le noyau de turbulence agencé le long de l'axe médian du canal de turbulence (32) et se ramifie seulement dans l'orifice (22) sur le boîtier (30).

5. Dispositif selon l'une quelconque des revendications précédentes, **caractérisé en ce que** la buse de plasma (14) peut être exploitée avec une tension alternative à haute fréquence.

6. Dispositif selon la revendication 5, **caractérisé en ce que** la buse de plasma (14) présente un élément (36) diélectrique, **en ce que** les électrodes (30 ; 40) de la buse de plasma sont séparées l'une de l'autre et permet la génération d'une décharge de corona comme décharge d'allumage.

7. Dispositif selon l'une quelconque des revendications précédentes, **caractérisé en ce que** la buse de plasma (14) est maintenue dans un bloc distributeur (16), qui présente des canaux à gaz (44) et des canaux à câble (46) pour l'alimentation de la buse de plasma en gaz de travail et tension de service et est fixé sur l'extrémité d'un arbre (52), qui passe à travers une chambre de pression (58), dans laquelle le gaz de travail est amené, et à travers un boîtier de contact (66) et est pourvu à l'intérieur du boîtier de contact de bagues de frottement (72) et dans lequel des canaux à gaz et des canaux à câble (60 ; 76, 80) sont réalisés pour la liaison avec les canaux correspondants du bloc distributeur (16).

8. Dispositif selon la revendication 7, **caractérisé en ce que** l'arbre (52) est monté dans une boîte de palier (54) formant la chambre de pression (58) et dépasse librement dans le boîtier de contact (66), qui est disposé sur le côté, opposé à la tête de rotation (10), du boîtier de palier (54).
